# DEMANDE DE BREVET EUROPEEN

(11) **EP 1 398 489 A1**
(43) Date de publication de la demande: **17.03.2004**
(21) Numéro de dépôt: 03292211.4
(22) Date de dépôt: 09.09.2003
(51) Int. Cl.: F02D 41/20, H01L 41/04

(54) **Dispositif et procédé de commande d'injecteur piézo-électrique**

(30) Priorité: 13.09.2002 FR 0211377
(71) Demandeur: Renault s.a.s., 92100 Boulogne Billancourt (FR)
(72) Inventeur: Ripoll, Christophe, 78220 Viroflay (FR)
(74) Mandataire: Cemeli, Eric

(57) **Abrégé**

Dispositif de commande (1) d'au moins un injecteur (3) équipé d'au moins un transducteur apte à se déplacer à réception d'une commande électrique, comprenant un circuit résonant formé d'une inductance (14) et de la capacité d'une cellule piézo-électrique d'injecteur, pour l'activation de ladite cellule piézo-électrique. L'inductance fait partie d'un transformateur dont elle forme le secondaire.

## Description

L'invention se rapporte au domaine de la commande d'injection de carburant pour moteur à combustion interne destiné par exemple à équiper un véhicule automobile.

L'invention concerne plus particulièrement une commande d'injection de carburant permettant d'atomiser le carburant injecté sous forme de très fines gouttelettes.

Les dispositifs d'injection de carburant utilisés aujourd'hui sur les moteurs à combustion interne équipant les véhicules automobiles ou routiers, fonctionnent classiquement sur le modèle d'une vanne dont on commande en permanence l'état ouvert ou fermé, le dosage du carburant injecté se faisant alors directement par le temps d'ouverture.

De tels systèmes d'injection comprennent une pompe électrique d'alimentation en carburant qui alimente, par le canal d'une rampe de distribution, l'ensemble des injecteurs sous une pression présentant une différence constante avec la pression régnant dans le collecteur d'admission grâce à un régulateur de pression. En contrôlant électroniquement l'électro-aimant actionnant la soupape de chaque injecteur, on commande le début et la durée d'ouverture de celle-ci et on détermine alors un débit précis de carburant pour chacun des injecteurs. Ainsi, la quantité de carburant injectée dépend uniquement du temps d'ouverture des électro-injecteurs.

Les injecteurs du type à aiguille commandée électromagnétiquement, qui sont les plus communément employés, présentent toutefois des limites qui freinent l'amélioration des performances des moteurs, notamment en terme de dépollution. En particulier, les temps mis pour ouvrir ou fermer les aiguilles sont encore trop élevés, environ 1 à 2 ms, ce qui empêche de répartir correctement l'injection sur tout le temps d'ouverture de la soupape. De plus, le temps minimum d'ouverture, qui détermine la dose minimale de carburant pouvant être injecté, est encore trop important pour certains points de fonctionnement du moteur.

Les injecteurs à aiguille connus présentent par ailleurs des orifices d'injection de diamètres relativement importants pour permettre de débiter les quantités requises de carburant pour les fonctionnements à pleine charge et hauts régimes des moteurs. Cette disposition génère des jets de carburant présentant des gouttes de fortes dimensions, ce qui freine la vaporisation du carburant (et donc la préparation du mélange carburé) et est à même de favoriser le phénomène de mouillage de paroi.

En effet, le carburant non vaporisé tend à se déposer sur les parois du conduit d'admission ou de la chambre de combustion en injection directe. Un tel dépôt entraîne des problèmes de dosage, particulièrement aigus dans les transitoires par manque de connaissance de la quantité de carburant qui rentre effectivement dans la chambre de combustion correspondante. Ce phénomène de mouillage des parois est l'une des causes importantes des fortes émissions de polluants lors des démarrages à froid des moteurs.

Par ailleurs, avec un injecteur classique à aiguille, à l'ouverture de l'aiguille lorsque cette dernière commence à quitter son siège, il se forme une bulle de liquide qui disparaît lorsque l'aiguille est complètement levée, l'écoulement du fluide se régularisant alors. Ce changement dans la nature de l'écoulement rend impossible tout contrôle précis du débit instantané de l'injecteur.

Certains ont cherché à résoudre ces différents problèmes, en développant des injecteurs utilisant des actuateurs piézo-électriques pour manoeuvrer l'aiguille de façon à abaisser la durée d'ouverture et de fermeture de l'aiguille, mais de tels systèmes qui fonctionnent toujours selon le principe d'une vanne, conservent des inconvénients importants liés notamment à la dispersion importante affectant la taille des gouttes dans le jet de carburant au sortir du nez de l'injecteur.

L'ensemble des problèmes cités précédemment se solde donc par une vaporisation du carburant pouvant être incomplète et non homogène lors de la préparation du mélange carburé dans la chambre de combustion, des dosages imprécis, avec pour conséquence une combustion incomplète se traduisant par la formation d'une quantité élevée de gaz polluants et un déficit énergétique altérant le rendement du moteur.

Le document FR-A-2 801 346 décrit un dispositif d'injection de carburant pour moteur à combustion interne équipé d'un injecteur comportant une buse alimentée en carburant et à l'extrémité de laquelle est ménagé un orifice d'injection, des moyens de mise en vibration cyclique de la buse tels qu'un transducteur piloté en durée et en intensité par le système électronique de contrôle moteur, et des moyens obturateurs rappelés par des moyens élastiques de rappel contre l'extrémité de la buse, lesdits moyens élastiques de rappel étant formés par une tige traversant le corps de l'injecteur jusqu'à une cavité située à l'extrémité opposée par rapport à l'orifice d'injection, ladite tige coopérant avec une masse et des moyens d'amortissement logés dans ladite cavité, la mise en vibration de la buse et des moyens obturateurs assurant l'éjection d'une quantité de carburant prédéterminée.

L'invention propose un dispositif de commande permettant de tirer le meilleur parti d'un tel injecteur.

L'invention propose un dispositif de commande d'injecteur permettant une combustion optimale du carburant injecté tout en restant de structure particulièrement simple et économique.

Le dispositif de commande, selon un aspect de l'invention, est destiné à au moins un injecteur équipé d'au moins un transducteur apte à se déplacer à réception d'une commande électrique, le dispositif comprenant un circuit résonant formé d'une inductance et de la capacité d'une cellule piézo-électrique d'injecteur, pour l'activation de ladite cellule piézo-électrique. Le nombre de composant actifs est ainsi réduit au minimum.

Dans un mode de réalisation de l'invention, le dispositif comprend un moyen pour fournir de l'énergie à l'inductance, et mettre le circuit en résonance.

Avantageusement, ladite inductance fait partie d'un transformateur dont elle forme le secondaire.

Dans un mode de réalisation de l'invention, le dispositif comprend un premier étage pourvu d'une inductance et d'un interrupteur de découpage montés en série.

Dans un mode de réalisation de l'invention, ladite inductance fait partie d'un transformateur dont elle forme le primaire.

Dans un mode de réalisation de l'invention, le circuit résonant comprend ladite inductance et une capacité d'une cellule piézo-électrique d'injecteur sélectionnée parmi une pluralité.

Dans un mode de réalisation de l'invention, le dispositif comprend une pluralité de cellules piézo-électriques montées en parallèle.

Dans un mode de réalisation de l'invention, chaque cellule piézo-électrique est montée en série avec un interrupteur de sélection.

Dans un mode de réalisation de l'invention, ledit interrupteur de sélection est bidirectionnel en courant. L'interrupteur de sélection peut comprendre un transistor et une diode montés en anti-parallèle.

L'interrupteur de découpage permet d'imposer une tension alternative aux bornes du primaire du transformateur. Le secondaire du transformateur relié à un moment donné à la capacité d'une cellule piézo-électrique d'injecteur fournit de l'énergie à ladite capacité. L'interrupteur de sélection permet d'alimenter une capacité d'une cellule piézo-électrique d'injecteur parmi une pluralité, et au moyen d'une commande adéquate d'alimenter les unes après les autres les capacités de cellules piézo-électriques d'injecteurs d'un moteur à combustion interne, notamment diesel.

Le dispositif peut comprendre un moyen pour sélectionner un transducteur pendant une durée déterminée T, et un moyen pour alimenter ledit transducteur pendant ladite durée T avec une tension modulée apte à déplacer ledit transducteur entre deux positions opposées.

L'interrupteur de découpage peut comprendre un transistor et une diode montés en anti-parallèle.

De préférence, le dispositif comprend un calculateur de commande apte à commander des composants de puissance. Le calculateur peut recevoir une consigne de tension en provenance de l'extérieur du dispositif. Le calculateur génère alors des signaux de commande de l'interrupteur de découpage et du ou des interrupteurs de sélection.

L'invention propose également un moteur à combustion interne comprenant au moins un injecteur équipé d'au moins un transducteur apte à se déplacer à réception d'une commande électrique et un dispositif de commande comprenant un circuit résonant formé d'une inductance et de la capacité d'une cellule piézo-électrique d'injecteur, pour l'activation de ladite cellule piézo-électrique.

La présente invention sera mieux comprise à l'étude de la description détaillée de quelques modes de réalisation pris à titre d'exemples nullement limitatifs et illustrés par les dessins annexés ; sur lesquels :
- la figure 1 est un schéma électrique d'un dispositif de commande selon un aspect de l'invention ; et
- les figures 2 et 3 montrent des formes d'onde du dispositif de commande de la figure 1.

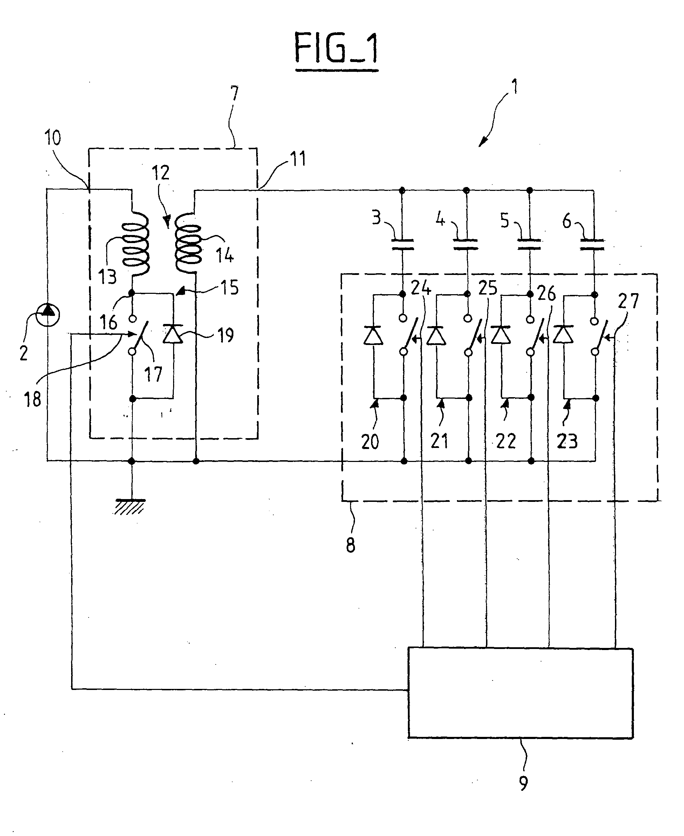

Comme on peut le voir sur la figure 1, un dispositif de commande 1 est alimenté par une source de tension 2, par exemple la batterie du véhicule dans lequel il est monté, ou plus généralement le réseau électrique du véhicule, par exemple de type continu 12 ou 42 volts ou encore de type alternatif.

Le dispositif de commande 1 est prévu pour alimenter quatre injecteurs piézo-électriques représentés par le même symbole qu'un condensateur en raison des caractéristiques électriques d'une cellule piézo-électrique qui est similaire à celle d'un condensateur et référencés 3 à 6.

Le dispositif de commande 1 proprement dit est équipé de deux étages de puissance référencés 7 et 8, d'un calculateur de pilotage 9 émettant des signaux de commande vers les étages de puissance 7 et 8. Le premier étage 7, destiné au découpage et à la mise en forme de la tension d'alimentation, comprend une entrée 10 reliée à la source de tension 2 et une sortie 11 reliée aux injecteurs 3 à 6. Le premier étage 7 comprend un transformateur 12 pourvu d'un primaire 13 relié à l'entrée 10 et d'un secondaire 14 et un interrupteur électronique 15 monté en série avec le primaire 13, avec une borne 16 reliée au primaire 13 et l'autre borne de l'interrupteur 15 reliée à la masse.

Tel qu'il est représenté en figure 1, l'interrupteur 15 comprend un transistor 17 pourvu d'une entrée de commande 18 et une diode 19 montées en antiparallèle. On pourrait, bien entendu, utiliser un transistor de type bidirectionnel. Dans le cas illustré, le transistor 17 pourrait être de type MOS.

Le secondaire 14 comprend une borne formant la sortie 11 du premier étage 7 et une autre borne reliée à la masse. La sortie 11 du premier étage 7 est reliée à des premières bornes des injecteurs 3 à 6 qui sont montés électriquement en parallèle. Les bornes opposées des injecteurs 3 à 6 sont reliées au deuxième étage 8.

Le deuxième étage 8 comprend quatre interrupteurs électroniques 20 à 23, chacun monté en série respectivement avec un injecteur 3, 4, 5, 6. Chaque interrupteur électronique 20 à 23 comprend une structure analogue à celle de l'interrupteur 15, à savoir un transistor, par exemple de type MOS, et une diode montée en anti-parallèle. Les bornes des interrupteurs électroniques 20 à 23 opposées aux injecteurs 3 à 6 sont reliées à la masse. Chaque entrée de commande 24 à 27 des interrupteurs électroniques 20 à 23 est reliée au calculateur 9.

Le calculateur 9 reçoit en entrée une consigne de tension et est pourvu de sorties destinées respectivement à l'entrée de commande 18 de l'interrupteur électronique 15 du premier étage 7, et aux entrées de commande 24 à 27 des interrupteurs électroniques 20 à 23 du deuxième étage 8.

Bien entendu, on comprend que le nombre d'injecteurs est lié au nombre de cylindres du véhicule automobile et sera donc généralement compris entre 1 et 12. Bien entendu, il est tout à fait possible de prévoir une pluralité d'injecteurs par cylindre.

Le dispositif de commande 1 permet de générer une haute tension périodique qui peut être supérieure à une centaine de volts à une fréquence élevée, typiquement supérieure à une dizaine de kiloHertz, sur la cellule piézo-électrique d'un injecteur à partir de la source de tension 2. Les interrupteurs 20 à 23 permettent de sélectionner l'injecteur qui doit être activé. L'interrupteur 15 du premier étage 7 permet d'effectuer un découpage d'une tension continue d'entrée et le transformateur 12 permet de déterminer une forme d'onde du type à modulation de largeur d'impulsions. La tension de sortie du premier étage 7 alimente les injecteurs 3 à 6 et plus précisément l'injecteur sélectionné par le troisième étage 9.

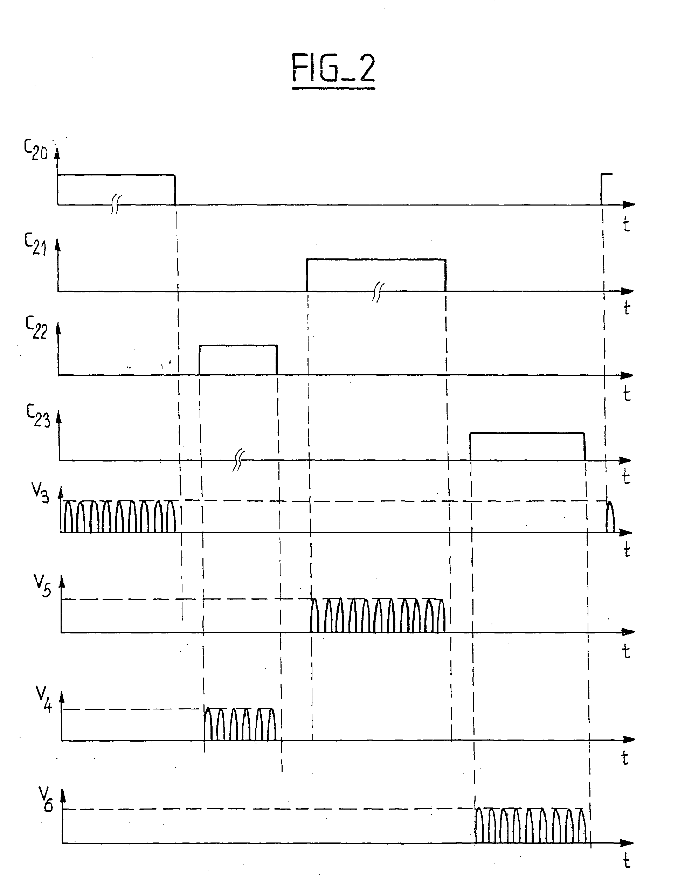

Sur la figure 2, la première courbe montre la tension C₂₀ sur l'entrée de commande de l'interrupteur 20, la deuxième courbe la tension C₂₁ sur l'entrée de commande de l'interrupteur 21, la troisième courbe la tension C₂₂ sur l'entrée de commande de l'interrupteur 22 et la quatrième courbe la tension C₂₃ sur l'entrée de commande de l'interrupteur 23.

Les tensions de commande se présentent sous la forme de créneaux, de largeur variable et de hauteur constante. En d'autres termes, la tension de commande est fixe et la durée de sélection des interrupteurs du troisième étage et donc de l'injecteur correspondant est variable. En outre, on prévoit qu'un seul injecteur est sélectionné en même temps et qu'une temporisation est prévue entre deux sélections d'injecteur.

La cinquième courbe montre la tension V₃ aux bornes de l'injecteur 3, la sixième courbe montre la tension V₄ aux bornes de l'injecteur 5, la septième courbe montre la tension V₅ aux bornes de l'injecteur 4 et la huitième courbe montre la tension V₆ aux bornes de l'injecteur 6.

Bien entendu, la tension aux bornes d'un injecteur est nulle tant que ledit injecteur n'est pas sélectionné. Lorsqu'un injecteur est sélectionné, par exemple l'injecteur 3, il voit une tension d'un signal sinusoïdal ou sensiblement sinusoïdal, lorsque l'interrupteur correspondant est passant.

Dans le mode de réalisation représenté ici, la fréquence et la tension du signal sinusoïdal sont fixes. Toutefois, il est avantageux, dans certains cas, de pouvoir faire varier la durée d'activation T, et/ou la fréquence du signal sinusoïdal, et/ou la tension du signal sinusoïdal.

En d'autres termes, la tension de la source 2 est transformée par les étages 7 et 8, en une tension alternative aux bornes des injecteurs, caractérisée par la tension crête V, la fréquence F et la durée T, et, ceci pour chaque injecteur. La consigne reçue par le calculateur 9 peut être fournie par des lois de commande venant d'une autre couche logicielle ou d'un autre calculateur dont les valeurs dépendent de l'état du véhicule, notamment du moteur, de la vitesse, de l'accélération, etc., et du type de combustion désiré.

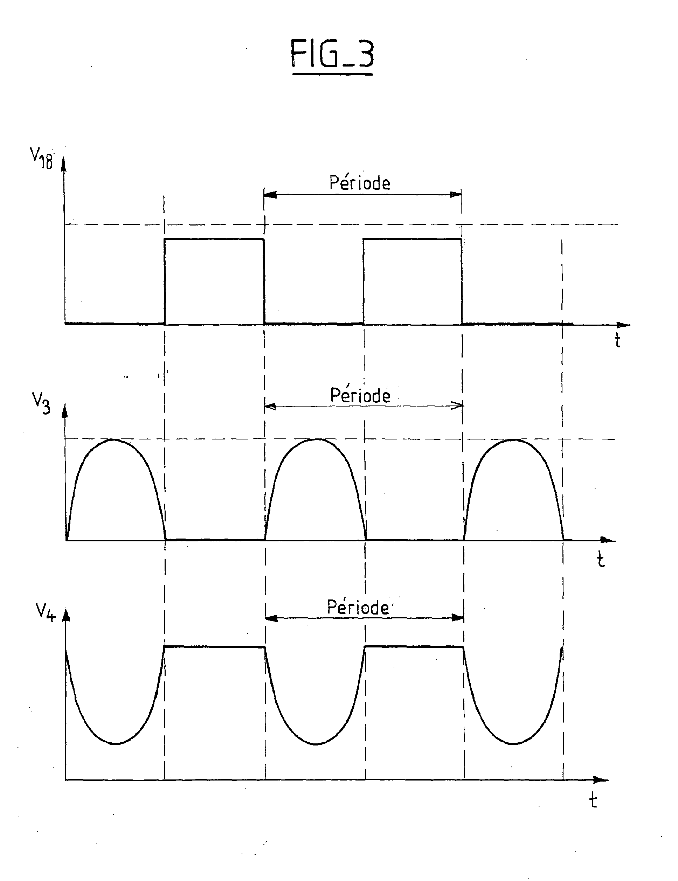

La première courbe de la figure 3 montre la tension V₁₈ à l'entrée de commande 18 de l'interrupteur 17 du premier étage 7. La deuxième courbe de la figure 3 montre la tension V₃ sur l'injecteur 3 qui est sélectionné. La troisième courbe de la figure 3 montre la tension V₂₅ aux bornes de l'interrupteur 21.

Lorsque la tension V₁₈ est élevée, l'interrupteur 17 est passant, et le transformateur 12 emmagasine de l'énergie. La tension aux bornes de l'injecteur sélectionné est nulle et la tension aux bornes des injecteurs non sélectionnés est élevée. Lorsque la tension V₁₈ est nulle, l'interrupteur 17 est bloqué, le secondaire 14 du transformateur 12 et la capacité de l'injecteur sélectionné résonnent. La tension aux bornes de l'injecteur sélectionné est élevée et sensiblement sinusoïdale et la tension aux bornes des injecteurs non sélectionnés est faible. Ces cycles sont répétés, puis on sélectionne un autre injecteur et on recommence. Les capacités des injecteurs non sélectionnés se chargent par l'intermédiaire des diodes en antiparallèle des interrupteurs du deuxième étage 8. Toutefois, les capacités des injecteurs non sélectionnés ne peuvent résonner avec le secondaire 14 du transformateur 12 car les transistors associés sont bloqués.

Le dispositif de commande 1 peut être équipé de moyens d'asservissement en tension des injecteurs 3 à 6, à savoir des boucles de contre-réaction et des capteurs nécessaires, afin d'asservir en tension les injecteurs.

L'invention permet de contrôler la quantité de carburant injectée par des paramètres de contrôle électrique aux bornes des injecteurs dont les caractéristiques en débit de carburant sont fonction desdits paramètres de contrôle. La commande peut être réalisée par la combinaison des moyens de pilotage des injecteurs, notamment la fréquence, la tension et la durée d'injection. Le dispositif de commande est de structure simple et économique avec un faible nombre de composants actifs.

## Revendications

1. Dispositif de commande (1) d'au moins un injecteur (3) équipé d'au moins un transducteur apte à se déplacer à réception d'une commande électrique, **caractérisé par le fait qu'**il comprend un circuit résonant formé d'une inductance (14) et de la capacité d'une cellule piézo-électrique d'injecteur, pour l'activation de ladite cellule piézo-électrique.

2. Dispositif selon la revendication 1, **caractérisé par le fait qu'**il comprend un moyen pour fournir de l'énergie à l'inductance (14).

3. Dispositif selon la revendication 1 ou 2, **caractérisé par le fait que** ladite inductance (14) fait partie d'un transformateur (12) dont elle forme le secondaire.

4. Dispositif selon l'une quelconque des revendications précédentes, **caractérisé par le fait qu'**il comprend un premier étage pourvu d'une inductance (13) et d'un interrupteur de découpage (15) montés en série.

5. Dispositif selon la revendication 4, **caractérisé par le fait que** ladite inductance (13) fait partie d'un transformateur (12) dont elle forme le primaire.

6. Dispositif selon l'une quelconque des revendications précédentes, **caractérisé par le fait que** le circuit résonant comprend ladite inductance et une capacité d'une cellule piézo-électrique d'injecteur sélectionnée parmi une pluralité.

7. Dispositif selon l'une quelconque des revendications précédentes, **caractérisé par le fait qu'**il comprend une pluralité de cellules piézo-électriques montées en parallèle.

8. Dispositif selon la revendication 7, **caractérisé par le fait que** chaque cellule piézo-électrique est montée en série avec un interrupteur de sélection (20).

9. Dispositif selon la revendication 8, **caractérisé par le fait que** ledit interrupteur de sélection (20) est bidirectionnel en courant.

10. Moteur à combustion interne comprenant au moins un injecteur (3) équipé d'au moins un transducteur apte à se déplacer à réception d'une commande électrique et un dispositif de commande (1) selon l'une quelconque des revendications 1 à 9.
